# EUROPEAN PATENT APPLICATION

(11) **EP 1 520 985 A2**
(43) Date of publication of application: **06.04.2005**
(21) Application number: 05000314.4
(22) Date of filing: 02.03.2001
(51) Int. Cl.: F03G 7/06

(54) **A self contained mechanism containing a shaped memory alloy actuator**

(30) Priority: 03.03.2000 US 517938
(62) Divisional of application: 01301925.2
(71) Applicant: UNITED TECHNOLOGIES CORPORATION, Hartford, CT 06101 (US)
(72) Inventor: Rey, Nancy M., Glastonbury, CT 06033 (US); Miller, Robin Mihekun, Ellington, CT 06029 (US); Tillman, Thomas G., West Hartford, CT 06119 (US); Rukus, Robert M., Vernon, CT 06066 (US); Kettle, John L., Vernon, CT 06066 (US)
(74) Representative: Leckey, David H.

(57) **Abstract**

A plurality of individual shape memory alloy (SMA) wires (12) are formed into a SMA bundle (10) to increase force output therefrom. The SMA bundle (10) has a parent shape and a deformed shape. The SMA bundle (10) in the deformed shape resumes its parent shape once the SMA bundle is heated to generate increased force output The SMA wires (12) can be configured into strands (14), ropes (18), arrays (32) or other shapes. The SMA material is also used in a variety of actuators (50, 66, 92, 100, 130) for generating substantially continuous motion.

## Description

The present invention relates to shape memory alloy ("SMA") material and, more particularly, to SMA material formed into SMA bundles and to actuators driven by the SMA material.

Conventional shape memory alloy or "SMA" materials exhibit a shape memory effect and have a "parent" condition or shape and a "deformed" condition or shape. The SMA material can be deformed from the parent shape in its low temperature martensitic state. Once the shape memory alloy is heated above its phase transformation temperature for transformation to its austenitic state, the shape memory alloy attempts to regain its original or "parent" shape. SMA is typically manufactured from nickel-titanium (NiTi) alloy which can be modified with copper (Cu) and/or other various elements. Thus, one advantageous property of the SMA is that the material recovers when heated, thereby generating force output.

Currently, SMA is used in a variety of industries primarily for single actuation applications and/or in a passive capacity. In the automotive industry, SMA is placed in heat sensitive control valves which work passively when ambient temperature rises. Single or low cycle applications for SMA materials also exist in the medical industry for bone plates, artificial joints, and in dental applications. SMA materials are also used in anti-scalding shower valves. Super elastic forms of SMA materials are presently used in frames for eyeglasses and antennas for cellular telephones. Although SMA material is widely used, most of the current commercial utilization of SMA material involves passive or one time use.

In some existing applications of SMA materials, the alloy is shaped as a thin wire. Although use of SMA is highly beneficial, the SMA wires have a number of limitations. One of the major limitations of the SMA wires is the recovery stress. The recovery stress dictates the amount of force that can be generated by the SMA wire. Typically, it is recommended that this recovery stress be limited to twenty to fifty-five thousand pounds per square inch (20 to 55 kpsi) (0.96 x 10⁶ - 2.63 MPa) for durability considerations. This limits the force output of a single twenty thousands inch wire (0.020 in.) (0.5 mm) to a maximum of six to seventeen pounds (6-17 lbs.) (27 - 76 Newtons). For applications that require greater force output, SMA is used in straight rods or tubes. However, SMA material with cross-sectional areas large enough to yield significant work output cannot be bent around corners, thus limiting its application as a continuous member. Multiple segments of SMA rods or tubes result in packaging problems as well as in multiple mechanical and electrical terminations, which add significant complexity to the system, increase overall cost, and decrease reliability.

An additional drawback of existing SMA materials is fatigue failure. SMA material tends to fail catastrophically when it reaches its fatigue limit Thus, in systems using either single wires or larger diameter rods, once the SMA material fails, the failure is typically a catastrophic one.

A suitable mechanical attachment method for existing SMA material is another shortcoming. SMA does not weld well, has a low friction surface, and its cross-section changes with conversion between martensitic and austenitic phases, thus decreasing the effectiveness of traditional techniques for crimping and swaging.

Therefore, it is highly desirable to maximize the beneficial qualities of SMA materials and minimize the limitations of SMA materials.

It is an object of the present invention to optimize use of shape memory alloy material (SMA).

It is another object of the present invention to increase force output of SMA material without sacrificing flexibility of the SMA material.

It is a further object of the present invention to minimize potential for catastrophic failure of systems using SMA materials.

It is a further object of the present invention to improve ability to terminate and attach SMA materials.

According to one aspect of the present invention, individual SMA wires are formed into a SMA bundle for increased force output such that the SMA bundle has a parent shape and a deformed shape with the SMA bundle in the deformed shape resuming its parent shape once the SMA bundle is heated to generate the increased force output. The SMA wires forming the SMA bundles can be configured into strands, ropes, arrays or other shapes.

According to a further aspect of the present invention, a method for making the SMA bundle comprises the steps of providing a plurality of individual SMA wires, each of the wires having a first end and a second end, forming the plurality of the SMA wires into the SMA bundle, and heat treating the SMA bundle. The resulting SMA bundle greatly increases the total force output over that of the individual SMA wire.

According to another aspect of the present invention, the SMA material is used in a variety of actuators for generating substantially continuous motion. The mechanisms according to the present invention include an output means engaged by a SMA actuator and a return means. The SMA actuator, either a SMA bundle or a rigid SMA member, is heated to transform the SMA actuator from a deformed state to a parent state, thereby generating a force output. The output force is used to drive the output means. The return means deforms the SMA actuator from its parent state to the deformed state. Thus, the mechanisms generate substantially continuous motion as the SMA actuator is repeatedly cycled between the parent shape and the deformed shape.

In one embodiment of the present invention, the return means is another SMA actuator that is also heated, alternatingly with the first SMA actuator, to generate force output and to deform the first SMA actuator. Additionally, the SMA actuator(s) can be actively cooled to accelerate the actuation cycle. Various embodiments of the mechanisms include ratchet mechanisms, an opposite motion mechanism, a cam mechanism, and self-contained mechanisms. The mechanisms of the present invention are actively controlled and are used in multi-cycle applications to generate significant force output.

One advantage of the SMA bundles of the present invention is that the SMA bundles will not fail catastrophically under normal fatigue or overload situations. Since the SMA bundles include multiple smaller diameter wires, when one or more wires fail, such failure will be apparent during visual, electrical or other type of nondestructive inspection. Thus, when failure in one or several wires is detected, repair or replacement of the entire SMA bundle can be scheduled to avoid subsequent catastrophic failure.

Another advantage of the SMA bundle is flexibility. The SMA bundle can be bent around corners or any other configuration without incurring damaging strain. Flexibility of the SMA bundles also eliminates the need for multiple segments of the SMA material.

A further major advantage of the present invention is that the flexible SMA bundles can be formed into mechanical terminations capable of withstanding great forces.

The present invention will now be described, by way of example only, with reference to the accompanying Figures, in which:
FIG. 1 is a schematic perspective view of a shape memory alloy ("SMA") bundle formed into a rope by a plurality of SMA wires, according to one embodiment of the present invention;
FIGS. 2A-D are schematic representations of cross-sections of various configurations of the SMA bundle of FIG. 1, according to other embodiments of the present invention;
FIG. 3 is a schematic representation of a cross-section of a strand of the SMA bundle of FIG. 2;
FIG. 4 is a fragmented, schematic perspective view of a plurality of SMA strands of FIG. 3 forming an array;
FIG. 5 is a fragmented view of a plurality of SMA wires twisted into the strand of FIG. 3 with ends seized prior to a heat treating procedure;
FIG. 6 is a perspective view of a heat treating fixture for the SMA bundle of FIG. 1;
FIG. 7 is a fragmented view of the plurality of the SMA wires of FIG. 5 twisted into the strand subsequent to the heat treating procedure;
FIGS. 8A-F are schematic representations of various terminations of the SMA bundle of FIG. 1;
FIG. 9 is a schematic representation of a self-contained actuator driven by the SMA bundle of FIG. 1;
FIG. 10 is a schematic representation of another embodiment of the self-contained actuator of FIG. 9;
FIG. 11 is a schematic representation of a further embodiment of the self-contained actuator of FIG. 9;
FIG. 12 is a schematic representation of a further embodiment of the self-contained actuator of FIG. 9;
FIG. 13 is a schematic representation of a ratchet mechanism actuated by the SMA bundle of FIG. 1, according to one embodiment of the present invention;
FIG. 14 is an enlarged, fragmented schematic representation of the ratchet mechanism of FIG. 13 with an engagement member secured to the SMA bundle to engage one of the teeth of an output gear;
FIG. 15 is an enlarged, fragmented schematic representation of the ratchet mechanism of FIG. 13 with a return spring pulling the engagement member from one gear tooth onto the following gear tooth;
FIG. 16 is an enlarged, fragmented schematic representation of the ratchet mechanism of FIG. 13 with the engagement member engaging the following gear tooth;
FIG. 17 is a schematic representation of a ratchet mechanism actuated by the SMA bundle of FIG. 1, according to another embodiment of the present invention;
FIG. 18 is a schematic representation of an opposing motion mechanism actuated by a plurality of SMA bundles of FIG.1;
FIG. 19 is a schematic representation of a cam mechanism actuated by the SMA bundle of FIG. 1 with the SMA bundle being in a deformed state;
FIG. 20 is a schematic representation of the cam mechanism of FIG. 19 with the SMA bundle being partially actuated into a parent state; and
FIG. 21 is a schematic representation of the cam mechanism of FIG. 19 with the SMA bundle being fully actuated into the parent state.

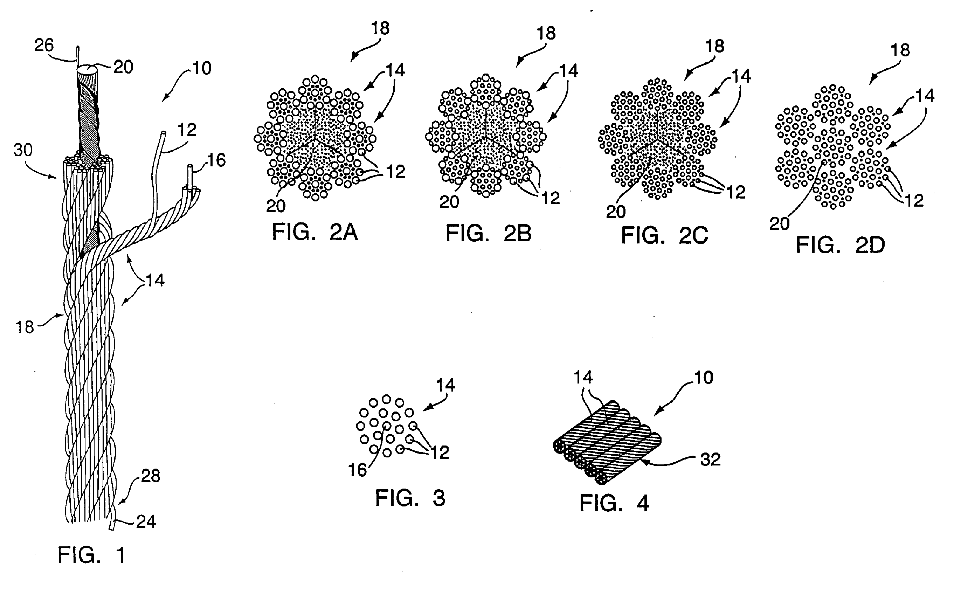

Referring to FIG. 1, a shape memory alloy (SMA) bundle 10 includes a plurality of single wires 12 formed into a plurality of strands 14. Each strand 14 has a center wire 16. The plurality of strands 14 then form a rope 18. Each rope 18 includes a core 20 also formed from the plurality of wires 12. Each wire 12 includes a first wire end 24 and a second wire end 26 corresponding to a first bundle end 28 and a second bundle end 30.

Referring to FIGS. 2-4, the SMA bundles 10, according to the present invention, regardless of the specific strand, rope or array configuration, are formed from a plurality of raw SMA wires 12. The SMA wires 12 can be either pure nickel-titanium (NiTi) alloy or nickel-titanium alloy modified with various other elements (such as copper (Cu)) or another material that exhibits shape memory effect. The specific composition of the SMA can vary in order to optimize properties necessary for the particular application. In the preferred embodiment, the raw SMA wires were manufactured by Raychem Corporation of Menlo Park, California. However, various other companies also manufacture SMA material.

As is well known in the conventional wire rope art, the wire ropes 18 can be fabricated to have various configurations and cross-sections. The SMA ropes 18, according to the present invention, can also be formed having various cross-sectional geometries, as shown in FIGS. 2A-D, and can be formed with or without the core 20. In the preferred embodiment of the present invention, the SMA bundle 10 is formed by the plurality of SMA wires 12 bundled into the strand 14 with each strand 14 having a total of nineteen (19) wires 12, as shown in FIG. 3. The nineteen wires 12 are arranged with one central wire 16 disposed in the center, six surrounding wires 12 forming a second row, and twelve wires 12 forming the outer row. Additionally, the SMA bundle 10 can be formed into an array 32 of strands 14, as shown in FIG. 4. The SMA wire diameters within each strand 14 and/or rope 18 can vary for improved nesting capability.

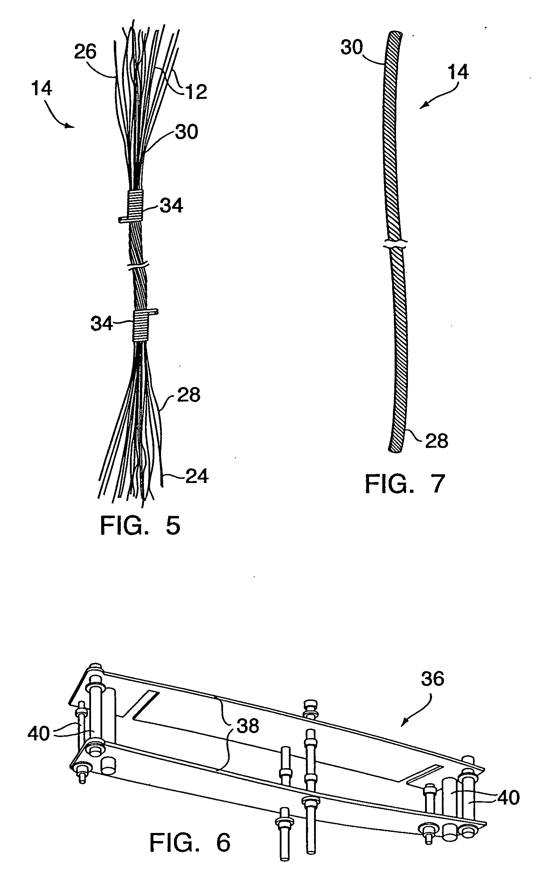

To fabricate the SMA bundle 10, a plurality of raw SMA wires 12 having first and second ends 24, 26, are formed into strands 14 and then ropes 18. As the individual raw SMA wires 12 are formed into strands 14 and then ropes 18, the first and second ends 28, 30 of each strand 14 and rope 18 are seized with seizing ties 34 to maintain rope shape and prevent unraveling, as known in wire rope art and as shown in FIG. 5. Although traditional wire rope techniques are used to form the rope 18, in the preferred embodiment of the present invention, no lubricants or oils are used with SMA ropes 18 to minimize contamination of heat treatment ovens. Additionally, plastic guides (not shown) rather than conventional metal guides are used to minimize heating of the SMA material during the lubrication-free rope forming process.

Subsequent to forming the SMA bundle 10, the bundle must be placed in tension and be kept taut to prevent unraveling and relative rotation of the wires 12 in the strand 14 and/or strands 14 in the rope 18 during the subsequent procedure. In the preferred embodiment, the SMA bundle 10 is placed into a heat treating fixture 36, shown in FIG. 6. The heat treating fixture 36 includes sides 38 with a plurality of rods 40 disposed therebetween. Although in a preferred embodiment of the present invention the geometry of the heat treating fixture 36 is modeled after the desired parent configuration of the SMA bundle, the heat treating fixture 36 can have any other geometry or conventional heat treatment equipment can be used. However, the heat treating fixture 36 with geometry substantially identical to the desired parent SMA bundle configuration yields a more efficient SMA bundle. Therefore, it is beneficial to incorporate the desired bends and shapes of the parent shape of the SMA bundle into the heat treating fixture 36. Subsequent to placing the SMA bundle 10 into the heat treating fixture 36, the SMA bundle 10 is placed in tension with the ends 28, 30 of the SMA bundle 10 secured onto the rods 40 of the fixture 36 to prevent relative rotation of individual SMA wires 12 in the strand 14 and/or strands 14 in the rope 18 and to ensure that the SMA rope 18 does not unravel during the heat treatment procedure, thereby establishing parent condition of the SMA bundle 10 as a tight rope, as shown in FIG. 7, with the desired bends. The SMA bundle 10 is then heat treated in accordance with the proper heat treatment procedure for SMA material.

Once the heat treatment of the SMA bundle 10 is completed, the SMA bundle 10 is cycled to eliminate the initial creep in the bundle, wherein the SMA bundle is alternatingly deformed and then heated to recover its parent shape. Although for some applications the cycling process may not be necessary, it is preferable to cycle the SMA bundle to obtain more reliable performance. The cycling process for the SMA bundle 10 is substantially similar to one used for individual SMA wires or SMA material.

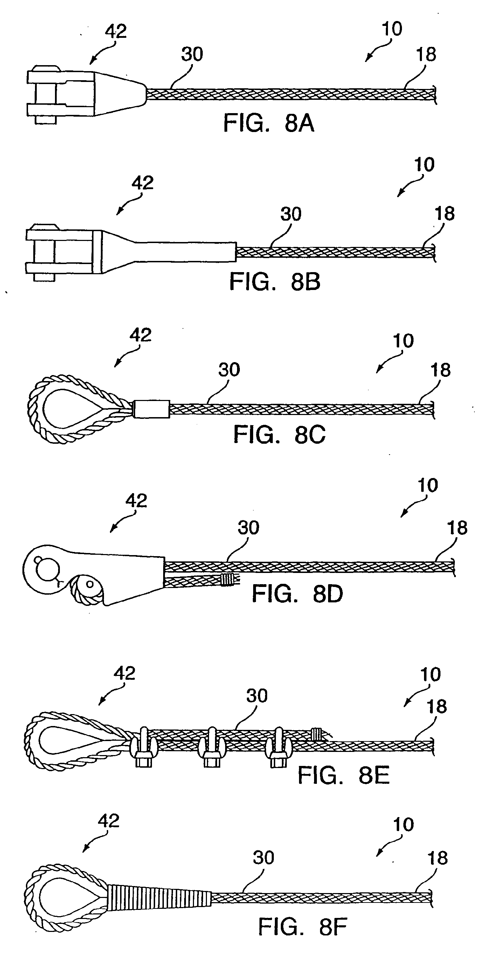

Referring to FIG. 8, the ends 28, 30 of the SMA bundle 10 can be formed into various rope terminations 42 similar to those of traditional wire ropes.

In operation, once the SMA bundle 10 is formed, heat treated, and, in some instances cycled, the SMA bundle 10 has an original shape or a "parent condition" of a rope or other type of a bundle. The SMA bundle can then be deformed in its low temperature martensitic condition. When the SMA bundle is heated above its phase transformation temperature to its austenitic state, the SMA bundle attempts to return to its unstrained, low temperature state with significant force which is used to perform useful work. The phase transformation temperature for the SMA bundle is substantially the same as the phase transformation temperature for each individual SMA wire. The amount of work the SMA bundle performs depends on a particular number of individual SMA wires forming the SMA bundle. For example, if each individual wire outputs X force and the SMA includes nineteen (19) wires, then the total output from the SMA bundle is approximately 19X or nineteen times the force output of the individual SMA wire. Thus, according to the present invention, various configurations of SMA bundles can be formed to obtain the desired amount of force.

In order to effect change from the martensitic to austenitic phase, the SMA bundles can be heated by many alternative devices and methods. For example, the SMA bundles can be heated with hot air or hot water, conduction, convection or radiation heat, electrically, and/or by other means. However, in the preferred embodiment of the present invention, voltage is applied across the SMA bundle to heat the SMA material and cause the transformation of the SMA bundles from the martensitic phase to the austenitic phase. The amount of power to be applied to the SMA bundle to reach phase transformation temperature depends on various factors, such as how fast the SMA bundle must be actuated, overall size of the SMA bundle, and base temperature of the SMA bundle. Additionally, the SMA bundle can be actively cooled to expedite the transformation process from the austenitic phase to the martensitic phase.

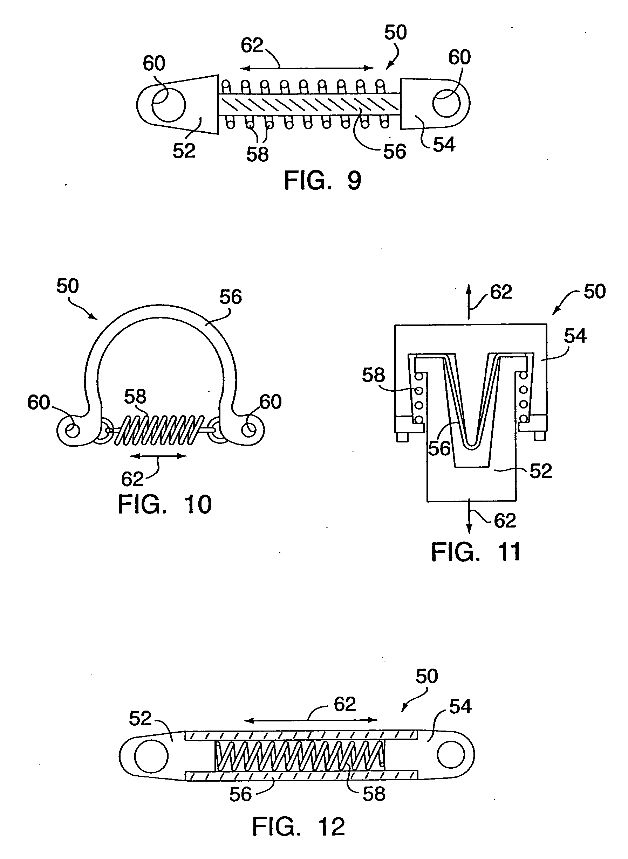

Referring to FIGS. 9-12, a self-contained SMA mechanism 50 includes a first anchor 52 and a second anchor 54 with a SMA actuator 56 and a return member 58 disposed therebetween. Each anchor 52, 54 may include an opening 60, as shown in FIGS. 9, 10, and 12. In the preferred embodiment, the SMA actuator 56 is a SMA bundle 10, as described above. However, a SMA tube or a SMA rod would be also suitable for certain applications. In FIGS. 9 and 11, the member 58 is a linear spring surrounding the SMA actuator 56. In FIG. 10, the anchors 52, 54 are connected by a curved SMA strut 56. In FIG. 12, the actuator 50 includes a return member 58 that is a pressurized compartment 58 acting as a spring with anchors 52, 54 sealed on the ends thereof and the SMA actuator 56 surrounding the compartment 58. Each mechanism 50 also includes a heating means (not shown).

In operation, with the SMA actuator 56 in a martensitic state, the spring 58 of the mechanism 50 stretches the SMA actuator 56. When the SMA actuator 56 is heated to achieve its austenitic state, the force of the SMA actuator overcomes the force of the spring and pulls the anchors 52, 54, as indicated by arrows 62, thereby actuating at least one of the anchors 52, 54.

One major benefit of the mechanisms 50 is the ability to repeatably generate high active force in a compact package.

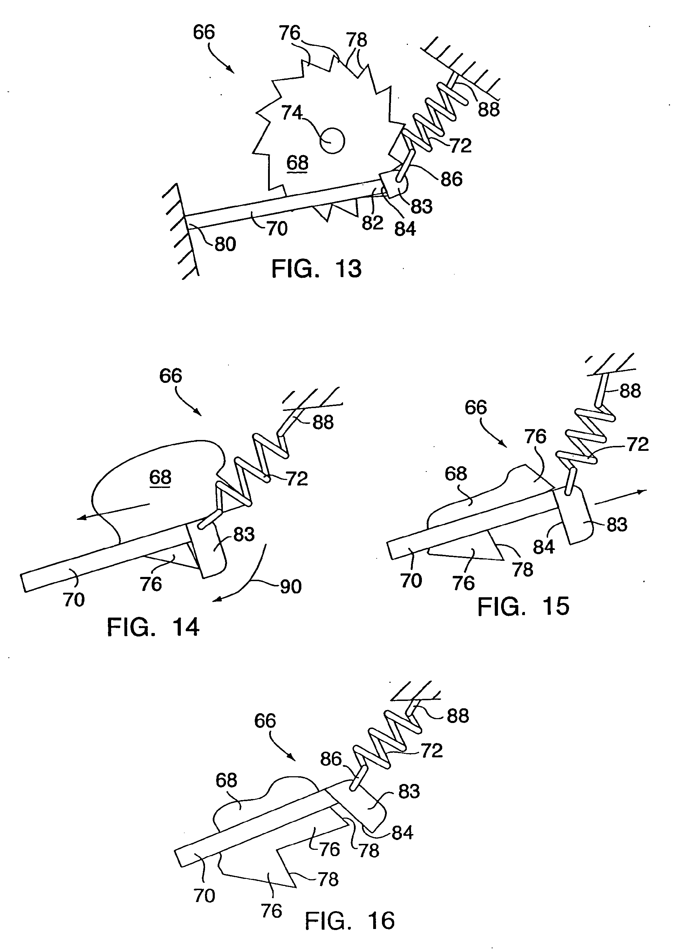

Referring to FIGS. 13-16, a ratchet mechanism 66 includes an output member or gear 68 driven by a SMA actuator 70 in cooperation with a return member 72. The output gear 68 rotates about a pivot 74 and includes a plurality of teeth 76 with each tooth 76 having a tooth surface 78. The SMA actuator 70 has a fixed end 80 and an actuation end 82, as best seen in FIG. 13. The actuation end 82 includes an engagement member 83 with an actuation surface 84 that is adapted to engage the tooth surface 78 of the tooth 76 of the gear 68. The actuation end 82 of the SMA actuator 70 is also linked to one end 86 of the return member 72. The other end 88 of the return member 72 is fixed. In the preferred embodiment, the return member 72 is a spring. However, the return member 72 can be another SMA actuator.

In operation, when the SMA actuator 70 of the ratchet mechanism 66 is in its martensitic state, the engagement member 83, disposed at the actuation end 82 of the SMA actuator 70, engages one of the teeth 76 of the output gear 68, as shown in FIG. 13, with the spring 72 applying force on the SMA actuator 70. When the SMA actuator 70 is heated above its phase transformation temperature, the SMA actuator 70 attempts to contract to its parent condition, resulting in an actuation pull motion, as indicated by arrow 90, rotating the output gear 68 and overcoming the spring force, as shown in FIG. 14. Once the output gear 68 is incrementally rotated and the temperature of the SMA actuator has cooled, the spring 72 pulls the SMA actuator 70, deforming and extending its length, as shown in FIG. 15, until the actuation surface 84 of the engagement member 83 engages the tooth surface 78 of the following tooth 76, as shown in FIG. 16. Once the actuation surface 84 of the engagement member 83 engages the following tooth 76, the actuation cycle is repeated.

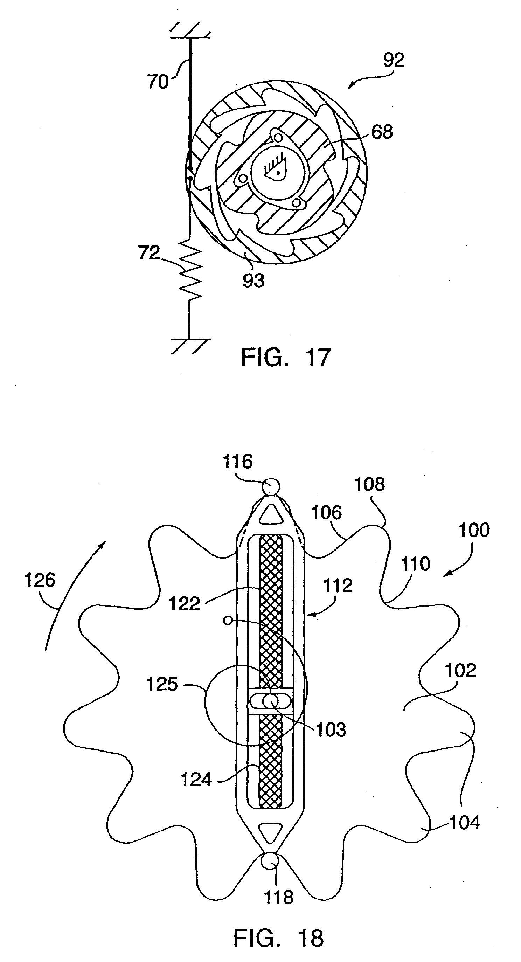

Referring to FIG. 17, a ratchet mechanism 92, according to another embodiment of the present invention, operates substantially analogously to the ratchet mechanism 66 describe above. The ratchet mechanism 92 includes an output member 68 driven by the SMA actuator 70 and a return spring 72 actuating an engagement member 93. The ratchet mechanism 92 operates substantially as a one-way clutch with the SMA actuator 70 and the return spring 72 driving the engagement member 93 and with the output member 68 rotating substantially continuously in one direction.

The ratchet mechanisms 66, 92 provide substantially continuous incremental motion using the SMA material and generating a significant force output In the preferred embodiment of the present invention, the SMA actuator 70 is a SMA bundle 10, as described above. However, the SMA actuator 70 can also be a tube or a rod.

Referring to FIG. 18, an opposing motion mechanism 100 includes an output member or gear 102 rotatable about a center pivot 103 and having a plurality of teeth 104 with each tooth 104 having a tooth surface 106, a tip 108, and a root 110. The opposing motion mechanism 100 also includes a contact point frame 112 disposed on both sides of the gear 102 and attaching onto a first contact point 116 and a second contact point 118. In the preferred embodiment, the contact points 116, 118 are bearings. Each contact point 116,118 engages the tooth surface 106 of the adjacent tooth 104 of the gear 102. The frame 112 is fixed at the center pivot 103 or to any structure (not shown). A first SMA actuator 122 and a second SMA actuator 124 are disposed on opposite sides of the center pivot 103 and are secured to the frame 112. Each SMA actuator 122,124 has a parent condition and a deformed condition. The mechanism 100 also includes a biasing member 125.

In operation, the first and second SMA actuators 122, 124 of the opposing motion mechanism 100 are alternatingly heated and, potentially, cooled. In the preferred embodiment of the present invention, the parent condition of each SMA actuator 122, 124 is extended, whereas the deformed condition of each SMA actuator is compressed. As the first SMA actuator 122 is heated, it extends, pushing the first bearing 116 upward toward the tip 108 of the corresponding tooth 104, eventually clearing the tip 108 of the tooth 104. While the first SMA actuator 122 is extended, the second SMA actuator 124 is compressed, pushing the second bearing 118 toward the root 110 of the corresponding tooth 104 and thereby rotating the gear 102, as indicated by arrow 126. Subsequently, the second SMA actuator 124 is heated. Upon heating, the second SMA actuator 124 extends, pushing the second bearing 118 upwards toward the tip 108 of the corresponding tooth 104, eventually clearing the tip 108 of the tooth 104. While the second SMA actuator 124 is extended, the first SMA actuator 122 is contracted, pushing the first bearing 116 toward the root 110 of the following tooth 104 and thereby continuing to rotate the gear 102, as indicated by arrow 126.

Thus, the mechanism 100 with two SMA actuators 122, 124 results in step continuous motion of the gear 102. Additionally, the gear motion can be reversed by biasing the spring 125 in the reverse direction. In the preferred embodiment of the present invention, the SMA actuators 122, 124 are SMA bundles 10, as described above. However, the SMA actuators 122, 124 can also be tubes or rods. Furthermore, the parent shape of the SMA actuators can be either extended or contracted. Additionally, in the preferred embodiment of the present invention, the SMA actuators 122,124 are heated to return from a deformed condition to its parent condition. However, the SMA actuators 122,124 also can be cooled to expedite the actuation cycle.

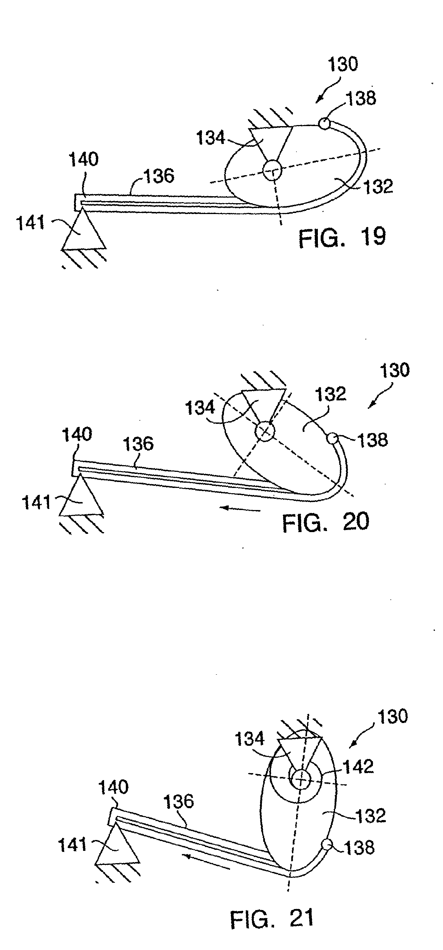

Referring to FIGS. 19-21, a cam mechanism 130 includes a cam 132 fixed by a link 134 and a SMA actuator 136 with a first SMA actuator end 138 attaching to the cam 132 and a second SMA actuator end 140 being fixed to a structure 141. The cam mechanism 130 also includes a return member 142 secured to the cam 132. In the preferred embodiment, the return member 142 is a spring. However, the return member 142 can be another SMA actuator.

In operation, the SMA actuator 136 of the cam mechanism 130 has a deformed condition and a parent condition. In the deformed condition, the SMA actuator 136 is extended, as shown in FIG. 19, and in the parent condition, the SMA actuator 136 is contracted, as shown in FIG. 21. As the SMA actuator 136 is heated, the SMA actuator contracts to its contracted parent condition, actuating the cam 132, as shown in FIGS. 20 and 21. The spring member 142 returns the cam 132 to its original position, as shown in FIG. 19, by extending and deforming the SMA actuator 136. Alternatively, the spring member 142 can be replaced by a second SMA actuator which upon heating would return the cam to its original position. Although in the preferred embodiment of the present invention the deformed condition of the SMA actuator 136 is extended and the parent condition of the SMA actuator is contracted, the reverse can be also true. The cam mechanism 130 substantially increases the work output of the SMA actuator.

The mechanisms 50, 66, 92, 100, 130 are actively controlled and are used in multi-cycle applications to generate significant force output. One advantage of these mechanisms is the relative simplicity and compactness. Another advantage of these mechanism is low maintenance.

One advantage of the SMA bundles 10 of the present invention is that the SMA bundles will not fail catastrophically under normal fatigue or overload situations. Since the SMA bundles include multiple smaller diameter wires, when one or more wires fail, such failure will be apparent during visual, electrical or other types of nondestructive inspection. Thus, when failure in one or several wires is detected, repair or replacement of the entire SMA bundle can be scheduled to avoid subsequent catastrophic failure.

Another advantage of the SMA bundle is flexibility. The SMA bundle 10 can be bent around corners or any other configuration without incurring damaging strain. Flexibility of the SMA bundles also eliminates the need for multiple segments of the SMA material.

A further major advantage of the present invention is that the flexible SMA bundles can be formed into mechanical terminations capable of withstanding great forces.

While the present invention has been illustrated and described with respect to a particular embodiment thereof, it should be appreciated by those of ordinary skill in the art, that various modifications to this invention may be made without departing from the scope of the present invention. For example, the core 20 of the SMA rope 18 or a center wire 16 of strands 14 can be fabricated from material different than the SMA material. Additionally, although certain embodiments describe a particular parent shape and a particular deformed shape, the parent and deformed shapes are interchangeable. Furthermore, the SMA wire can have either a round cross-section or any other shape of a cross-section. In certain embodiments described the SMA actuator may comprise a rigid SMA member.

## Claims

1. A self-contained mechanism (50) comprising:
a first anchor (52);
a second anchor (54) spaced apart from said first anchor (52);
a shape memory alloy (SMA) actuator (56) disposed between said first anchor (52) and said second anchor (54), said SMA actuator (56) having a parent condition and a deformed condition, said SMA actuator (56) producing a force output when transformed from said deformed condition into said parent condition; and
a return member (58) engaging said SMA actuator (56), said return member (58) deforming said SMA actuator (56) at temperatures below a phase transformation temperature of said SMA actuator (56), said SMA actuator (56) overcoming said return member (58) during transformation into said parent condition as said SMA actuator is heated above said phase transformation temperature to actuate at least one of said first anchor (52) and said second anchor (54).

2. The self-contained mechanism (50) according to claim 1 wherein said return member (58) is a pressurized compartment with said first and second anchors (52, 54) sealed on ends of said pressurized compartment.

3. A ratchet mechanism (66, 92) comprising:
an output member (68);
an engagement member (83) engaging said output member (68);
a return member (72) having a first return member end (88) and a second return member end (86) with said first return member end (88) being fixed; and
a shape memory alloy (SMA) actuator (70) having a first SMA actuator end (80) and a second SMA actuator end (82), said first SMA actuator end (80) being fixed and said second SMA actuator end (82) being linked to said second return member end (86) and to said engagement member (83), wherein said engagement member (83) is adapted to sequentially engage said output member (68) to generate substantially continuous work output from said mechanism (66).

4. The ratchet mechanism (66) according to claim 3 wherein said substantially continuous motion is generated as said SMA actuator (70) attempts to regain its parent shape during transformation from martensitic state to austenitic state and said return member (72) deforms said SMA actuator (70) when said SMA actuator (70) is in its martensitic state.

5. The ratchet mechanism (66) according to claims 3 or 4 wherein said output member (68) is a gear.

6. The ratchet mechanism (66, 92) according to claims 3 or 4 wherein said output member (68) is a one-way clutch.

7. A cam mechanism (130) comprising:
a cam (132) movably fixed to a structure (134);
a return member (142) secured to said cam (132); and
a shape memory alloy (SMA) actuator (136) having a first SMA end (140) and a second SMA end (138), said first SMA end (140) being fixed, said second SMA end (138) engaging said cam (132) for driving said cam (132) as said SMA actuator (136) transitions between martensitic state and austenitic state.

8. The cam mechanism (130) according to claim 7 wherein said SMA actuator (136) is heated to cause transition from said martensitic state to said austenitic state.

9. The cam mechanism (130) according to claims 7 or 8 wherein said return member (142) deforms said SMA actuator (136) while said SMA actuator is in said martensitic state.

10. A mechanism (50, 66, 92, 100, 130) for generating work output comprising:
an output means (52, 68, 102, 132);
a shape memory alloy (SMA) actuator (56, 70, 122, 124, 136) engaging said output means, said SMA actuator having a parent condition and a deformed condition, said SMA actuator driving said output means during transition from said deformed condition to said parent condition; and
a return member (58, 72, 125, 142) for deforming said SMA actuator from said parent condition to said deformed condition.

11. The mechanism according to claim 10 wherein said output means is a cam (132).

12. The mechanism for performing work according to claim 10 wherein said output means is a gear (68, 102) having a plurality of teeth (76, 104) and said SMA actuator is adapted to sequentially engage said plurality of teeth (76, 104) of said gear (68, 102).

13. The mechanism according to claim 10 wherein said output means has a first anchor (52) and a second anchor (54) with said SMA actuator driving at least one of said anchors (52, 54).

14. The mechanism according to any of claims 10-13 wherein said SMA actuator (56, 70, 122, 124, 136) is heated to transition from said deformed condition to said parent condition.

15. The mechanism according to any of claims 1-14 wherein said SMA actuator (56, 70, 122, 124, 136) is heated and cooled to transition between said deformed condition and said parent condition.

16. The mechanism (50,66,92,100,130) according to any of claims 1-15 wherein said return member (58,72,125,142) is a spring.

17. The mechanism (50,66,92,100,130) according to any of claims 1-15 wherein said return member (58,72,125,142) is a second shape memory alloy (SMA) actuator.

18. The mechanism according to claim 17 wherein said second SMA actuator is heated to cause transition of said second SMA actuator from martensitic to austenitic state.

19. The mechanism according to claim 18 wherein said SMA actuator (56,70,122,124,136) and said second SMA actuator are alternatingly heated to transition from said deformed condition to said parent condition.
